# EUROPÄISCHE PATENTSCHRIFT

(11) **EP 4 526 144 B1**
(45) Veröffentlichungstag und Bekanntmachung des Hinweises auf die Patenterteilung: **17.12.2025**
(21) Anmeldenummer: 23722312.8
(22) Anmeldetag: 25.04.2023
(51) Int. Cl.: B60K 15/05

(54) **LADEVORRICHTUNG ZUR MONTAGE IN EINER KAROSSERIEÖFFNUNG EINES KRAFTFAHRZEUGS UND VERFAHREN ZUR MONTAGE EINER LADEVORRICHTUNG**
CHARGING DEVICE FOR MOUNTING IN A BODYWORK OPENING OF A MOTOR VEHICLE AND METHOD FOR MOUNTING A CHARGING DEVICE
DISPOSITIF DE CHARGE DESTINÉ À ÊTRE MONTÉ DANS UNE OUVERTURE DE CARROSSERIE D'UN VÉHICULE AUTOMOBILE ET PROCÉDÉ DE MONTAGE D'UN DISPOSITIF DE CHARGE

(30) Priorität: 16.05.2022 DE 102022112142
(43) Veröffentlichungstag der Anmeldung: 26.03.2025
(73) Patentinhaber: Bayerische Motoren Werke Aktiengesellschaft, 80809 München (DE)
(72) Erfinder: ROTH, Thomas, 85386 Eching (DE)
(86) Internationale Anmeldenummer: PCT/EP2023/060784
(87) Internationale Veröffentlichungsnummer: WO 2023/222336

(56) Entgegenhaltungen:
- DE-A1- 102011 120 518
- DE-A1- 102017 212 402
- JP-A- 2005 199 769
- US-A1- 2018 264 938
- US-A1- 2021 122 234
- US-B2- 7 390 048

## Beschreibung

Die Erfindung betrifft eine Ladevorrichtung zur Montage in einer Karosserieöffnung eines Kraftfahrzeugs und ein Verfahren zur Montage einer Ladevorrichtung in einer Karosserieöffnung eines Kraftfahrzeugs.

Insbesondere ist die Ladevorrichtung für Fahrzeuge mit einem Elektroantrieb oder mit einem Hybridantrieb geeignet.

Bei Fahrzeugen mit Elektro- oder Hybridantrieb wird elektrische Energie in einem elektrischen Energiespeicher wie zum Beispiel einer Batterie gespeichert. Die Batterie wird üblicherweise an einer Ladestation aufgeladen, die zum Laden mittels eines Ladekabels mit einer Ladevorrichtung des Fahrzeugs verbunden wird. Die Ladevorrichtung umfasst zum Beispiel eine Ladedose als Anschlusselement, an die zum Laden des Fahrzeugs ein Ladestecker eines Ladekabels angeschlossen wird, das mit der Ladestation verbunden ist.

Um Fahrzeuge mit einem Kraftstoff zu betanken, kann die Ladevorrichtung zum Beispiel ein Anschlusselement aufweisen, dass ein Tankeinfüllrohr aufnimmt oder auf andere Art mit einer Kraftstoffzufuhrleitung verbunden wird.

Bei üblichen Ladevorrichtungen ist das Anschlusselement, das im Fall einer elektrischen Ladevorrichtung zum Beispiel durch eine Ladedose gebildet wird, in einem Halteelement angeordnet, das oftmals auch als Ladetopf, Lademulde oder Ladeschale bezeichnet wird. Dabei besteht häufig das Problem, dass Wasser und Schmutz zwischen dem Halteelement oder Ladetopf und dem darin befindlichen Anschlusselement hindurch in Bereiche des Fahrzeugs dringen kann, die hinter der Lademulde liegen.

Um dem entgegenzuwirken befindet sich oftmals zwischen dem Halteelement bzw. dem Ladetopf und dem Anschlusselement bzw. der Ladedose eine Abdichtung, so dass ein hinter dem Halteelement gelegener Trockenraum vor Nässe und Verschmutzung geschützt ist. Bei Fahrzeugen, in denen ein derartiger Trockenraum vorhanden ist, erfolgt die Abdichtung zumeist mittels einer an das Halteelement angespritzten Weichkomponente.

Dabei besteht jedoch das Problem, dass der Dichtbereich am Übergang zwischen Halteelement oder Ladetopf und Anschlusselement oder Ladedose die optischen Design-Anforderungen nicht erfüllt, so dass die Wertigkeit des Ladetopfes beeinträchtigt wird. Neben dem Erfordernis einer zuverlässigen Abdichtung und einer hochwertigen Erscheinung besteht das weitere Problem, dass zusätzlich noch Toleranzen der Bauteile und elastische Verformungen der Ladedose an der Dichtungsebene ausgeglichen werden müssen. Oftmals ist eine Ladedose nur mit Sondermaßnahmen montierbar, da hier zu hohe Montagekräfte auftreten. Darüber hinaus kann in Grenzlagen keine Abdichtung sichergestellt werden, da die Dichtungsfläche aufgrund einzuhaltender Normen nicht vergrößert werden kann

Die gattungsbildende Druckschrift DE 10 2019 123 231 A1 beschreibt eine Lade- oder Tankmulde zum Einsetzen in eine Karosserieöffnung eines Kraftfahrzeuges, wobei die Lade- oder Tankmulde einen äußeren Muldenkörper und einen inneren Muldenbereich aufweist, welcher eine Durchgangsöffnung umgibt, in die ein Ladesteckverbinder zum Aufladen einer Batterie des Kraftfahrzeuges oder ein Tankstutzen oder Tankeinfüllrohr einsetzbar ist. Der äußere Muldenkörper weist zumindest bereichsweise ein vorzugsweise opakes oder nur schwach durchscheinendes Kunststoffmaterial auf. Der innere Muldenbereich weist zumindest bereichsweise ein transparentes oder transluzentes Kunststoffmaterial auf und ist integral mit dem Material des äußeren Muldenkörpers ausgeformt. Ein Dichtbereich in Gestalt einer Dichtlippe ist vorgesehen, die dichtend an einem Ladesteckverbinder oder an einem Tankstutzen oder Tankeinfüllrohr anliegt. Der Dichtbereich bzw. die Dichtlippe und der innere Muldenbereich weisen bei dieser Ausführungsform dasselbe transparente Weichkomponenten-Kunststoffmaterial auf und sind integral zueinander ausgebildet.

DE 10 2014 115 907 A1 zeigt eine Ladevorrichtung für ein elektrisch antreibbares Fahrzeug, mit einer Ladeschale, die eine Zugangsöffnung aufweist, einer innerhalb der Ladeschale angeordneten elektrischen Ladedose, einem schwenkbar in der Ladeschale gelagerten Verschlussdeckel, der in einer geschlossenen Stellung die Zugangsöffnung der Ladeschale abdeckt und in einer geöffneten Stellung diese Zugangsöffnung freigibt, sowie mit einer Dichtung. Die Dichtung ist als ein sich um die Ladedose herum erstreckender Dichtring ausgebildet. Der Verschlussdeckel weist einen Ringansatz aufweist, der bei geschlossenem Verschlussdeckel den Dichtring entlang dessen Ringkontur kontaktiert.

In der DE 20 2017 007 349 U1 ist eine Ladeklappeneinheit zum Verschließen einer Ladeöffnung in einer Karosserie eines Fahrzeugs mit einem elektrischen Antrieb und einem elektrischen Energiespeicher beschrieben. Die Ladeklappeneinheit weist ein Dichtelement auf, das in einer Schließposition der Ladeklappe die Ladeklappe mit der Außenfläche der Karosserie abdichtet. Das Dichtelement ist als eine Weichkomponente ausgebildet, die verformbar ist.

US 2018/264938 A1 beschreibt eine Einfüllstutzen-Gehäuseanordnung zur Montage an einer Karosserieöffnung eines Kraftfahrzeugs, umfassend einen Gehäusekörper, der eine Durchgangsöffnung zum Einführen mindestens eines Tankeinfüllrohrs bildet, einen ringförmigen Dicht- und Haltekörper, der erste Haltemittel zum Halten des Dicht- und Haltekörpers an der Karosserieöffnung und zweite Haltemittel zum Halten des Dicht- und Haltekörpers am Gehäusekörper aufweist. Die ersten Haltemittel sind mit ersten Dichtmitteln versehen, die in ihrem an der Karosserieöffnung gehaltenen Zustand dichtend an einer Oberfläche eines die Karosserieöffnung begrenzenden Karosserieteils anliegen. Die zweiten Haltemittel sind mit zweiten Dichtmitteln versehen, die in ihrem am Gehäusekörper gehaltenen Zustand dichtend am Gehäusekörper anliegen.

DE 10 2017 212 402 A1 beschreibt eine Ladevorrichtung zum Laden eines in einem Kraftfahrzeug befindlichen elektrischen Speichers. Die Ladevorrichtung umfasst einen an einem Seitenrahmen des Kraftfahrzeuges befestigten Ladetopf und eine hiermit verbundene Ladedose, die an einem Radhaus des Kraftfahrzeuges befestigt ist. Der Ladetopf hat an seiner der Ladedose zugewandten Seite mindestens ein Dichtungsmittel, das an seiner dem Ladetopf abgewandten Seite mindestens teilweise zwischen der Ladedose und dem Radhaus dichtend angeordnet ist.

DE 2011 120 518 A1 zeigt ein Modulelement mit einem daran angeordneten Kraftstoffeinfüllstutzen für ein Kraftfahrzeug, wobei das Modulelement an einer Seitenwand des Kraftfahrzeuges angeordnet ist, und wobei das Modulelement auf einer der Seitenwand zugewandten Seite ein expandierbares Dichtungselement aufweist.

Es ist die Aufgabe der Erfindung, eine Ladevorrichtung und ein Verfahren zur Montage einer Ladevorrichtung in einer Karosserieöffnung eines Kraftfahrzeugs zu schaffen, mit welcher der Übergang zwischen Halteelement und Anschlusselement zuverlässig abgedichtet wird, wobei Toleranzen und elastische Verformungen der Ladedose an der Dichtungsebene ausgeglichen werden.

Die Ladevorrichtung soll darüber hinaus auch eine ansprechende optische Erscheinung bieten.

Die Aufgabe wird gelöst durch eine Ladevorrichtung zur Montage in einer Karosserieöffnung eines Kraftfahrzeugs, umfassend ein Halteelement, das zur Befestigung an einem Karosserieteil ausgebildet ist und eine durchgehende Öffnung aufweist, in die ein Anschlusselement zum Herstellen einer Steckverbindung mit einer elektrischen Ladestation und/oder mit einer Kraftstoffzufuhrleitung zur Zufuhr von Kraftstoff einsetzbar ist, und eine Dichtungseinheit, um das eingesetzte Anschlusselement zum Halteelement hin abzudichten, wobei die Dichtungseinheit eine erste Komponente aus einem verformbaren Material umfasst, und eine zweite Komponente aus einem nicht verformbaren Material umfasst, wobei die erste Komponente eine oder mehrere Dichtungslippen umfasst und beim Einsetzen des Anschlusselements eine Dichtungsfläche an der Außenseite des Anschlusselements bildet, und die Dichtungseinheit derart an dem Halteelement befestigbar oder befestigt ist, dass sie nach dem Einsetzen des Anschlusselements von diesem überdeckt wird, so dass sie von außen nicht sichtbar ist, wobei die Dichtungseinheit als ein zusätzliches Bauteil an der Rückseite des Halteelements angeordnet ist und sich von dort aus nach hinten erstreckt, wobei sie einen hinter der durchgehenden Öffnung des Halteelements gelegenen Aufnahmebereich für das Anschlusselement umgibt, wobei sich die ein oder mehreren Dichtungslippen ausgehend von der zweiten Komponente so weit in den hinter dem Halteelement gelegenen Aufnahmebereich hinein erstrecken, dass sie sich beim Einsetzen des Anschlusselements in die durchgehende Öffnung des Halteelements verformen und sich hinter der durchgehenden Öffnung umlaufend flächig an die Mantelfläche des Anschlusselements anlegen.

Vorteilhaft ist die erste Komponente derart ausgebildet, dass sie an dem eingesetzten Anschlusselement umlaufend anliegt.

Bevorzugt stützt sich die zweite Komponente an dem Halteelement ab, um die erste Komponente umlaufend gegen das eingesetzte Anschlusselement zu drücken.

Bevorzugt ragt die erste Komponente in den hinter der Öffnung gelegenen Aufnahmebereich für das Anschlusselement hinein

Bevorzugt ist die Dichtungseinheit durch eine Clipsverbindung an dem Halteelement befestigbar oder befestigt ist.

Vorteilhaft ist die Dichtungseinheit durch ein oder mehrere elastische Elemente an dem Halteelement befestigbar.

Insbesondere rasten die elastischen Elemente durch Andrücken der Dichtungseinheit an das Halteelement in jeweils zugeordnete Verbindungsbereiche ein.

Bevorzugt wird die zweite Komponente durch ein H-Profil gebildet wird, das an dem Halteelement befestigbar oder befestigt ist.

Vorteilhaft erstreckt sich die zweite Komponente gemeinsam mit der daran befestigten ersten Komponente von der Rückseite des Halteelements aus nach hinten, so dass eine durch die Dichtungseinheit und das Anschlusselement gebildete Dichtungsfläche hinter der Öffnung angeordnet ist.

Vorteilhafterweise umfasst die erste Komponente eine oder mehrere zweite Dichtungslippen, die zwischen der zweiten Komponente und einem Randbereich des Halteelements angeordnet sind, der die Öffnung umgibt und eine umlaufende Anlagefläche für die Dichtungseinheit bildet.

Insbesondere ist die Anlagefläche parallel zur Mantelfläche des Anschlusselements ausgerichtet.

Bevorzugt ist die umlaufende Anlagefläche in Bezug auf die Öffnung nach außen gerichtet

Vorteilhaft ist mindestens eine der ersten Dichtungslippen L-förmig ausgebildet und/oder bildet einen Winkel.

Bevorzugt erstreckt sich ein erster Abschnitt der Dichtungslippe schräg entgegen der Einführrichtung beim Einsetzen des Anschlusselements in die Öffnung.

Vorteilhaft erstreckt sich ein zweiter Abschnitt der Dichtungslippe schräg in Einführrichtung beim Einsetzen des Anschlusselements in die Öffnung.

Vorteilhaft liegt der zweite Abschnitt am vorderen Ende der Dichtungslippe.

Gemäß einem Aspekt der Erfindung wird ein Verfahren zur Montage einer Ladevorrichtung in einer Karosserieöffnung eines Kraftfahrzeugs geschaffen, umfassend die Schritte: Bereitstellen eines Halteelements, das eine durchgehende Öffnung aufweist, in die ein Anschlusselement zum Herstellen einer Steckverbindung mit einer elektrischen Ladestation und/oder mit einer Kraftstoffzufuhrleitung zur Zufuhr von Kraftstoff einsetzbar ist; Befestigen einer Dichtungseinheit an dem Halteelement, um das eingesetzte Anschlusselement zum Halteelement hin abzudichten, wobei die Dichtungseinheit eine erste Komponente aus einem verformbaren Material und eine zweite Komponente aus einem harten Material umfasst; wobei die erste Komponente eine oder mehrere Dichtungslippen umfasst, die beim Einsetzen des Anschlusselements eine Dichtungsfläche an der Außenseite des Anschlusselements bilden; Befestigen des Halteelements in der Karosserieöffnung; und Einsetzen des Anschlusselements in die Öffnung des Halteelements; wobei die Dichtungseinheit nach dem Einsetzen des Anschlusselements von diesem überdeckt wird, so dass sie von außen nicht sichtbar ist; wobei die Dichtungseinheit als ein zusätzliches Bauteil an der Rückseite des Halteelements derart befestigt wird, dass sie sich von dort aus nach hinten erstreckt und einen hinter der durchgehenden Öffnung des Halteelements gelegenen Aufnahmebereich für das Anschlusselement umgibt, wobei sich die ein oder mehreren Dichtungslippen ausgehend von der zweiten Komponente soweit in einen hinter dem Halteelement gelegenen Aufnahmebereich für das Anschlusselement hinein erstrecken, dass sie sich beim Einsetzen des Anschlusselements verformen und sich hinter der durchgehenden Öffnung des Halteelements umlaufend flächig an die Mantelfläche des Anschlusselements anlegen.

Bevorzugt wird die Dichtungseinheit durch Anclipsen an dem Halteelement befestigt.

Vorteilhaft wird bei dem Verfahren eine Ladevorrichtung gemäß der Erfindung verwendet.

Nachfolgend werden Ausführungsbeispiele der Erfindung anhand von Zeichnungen näher erläutert. Darin zeigen:
- **Fig. 1**: einen Ladevorrichtung gemäß einer bevorzugten Ausführungsform der Erfindung, die in einem Kraftfahrzeug montiert ist und eine Ladedose umfasst, in einer Ansicht von vorne;
- **Fig. 2**: eine Ansicht der Rückseite der in Fig.1 gezeigte Ladevorrichtung, jedoch ohne die Ladedose;
- **Fig. 3**: eine perspektivische teilweise Schnittansicht der Ladevorrichtung im Bereich einer Dichtungseinheit;
- **Fig. 4**: eine perspektivische teilweise Schnittansicht der Ladevorrichtung im Bereich einer Clipsverbindung zur Befestigung der Dichtungseinheit;
- **Fig. 5**: eine schematische Schnittansicht eines Bereichs der in Fig. 1 gezeigten Ladevorrichtung;
- **Fig. 6**: einen vergrößerten Ausschnitt von Fig. 5 im Bereich der Dichtungseinheit; und
- **Fig. 7**: eine schematische Schnittansicht einer Variante der Dichtungseinheit gemäß einer weiteren bevorzugten Ausführungsform der Erfindung;

In den Figuren sind gleiche oder einander entsprechende Elemente jeweils mit den gleichen Bezugszeichen bezeichnet und werden nicht erneut beschrieben, sofern dies nicht zweckmäßig erscheint. Die in der gesamten Beschreibung enthaltenen Offenbarungen sind sinngemäß auf gleiche Teile mit gleichen Bezugszeichen bzw. gleichen Bauteilbezeichnungen übertragbar. Abwandlungen sind möglich, ohne den durch die Ansprüche definierten Schutzbereich der Erfindung zu verlassen.

Der Begriff "hinter", wie zum Beispiel hinter dem Halteelement, hinter der Öffnung, usw., bezieht sich auf den im Fahrzeug montierten Zustand der Ladevorrichtung, von der Außenseite des Fahrzeugs ausgehend zum Fahrzeuginneren hin. Er kann sich auch auf die Ladevorrichtung oder das Halteelement selbst beziehen, von dessen Vorderseite ausgehend in Richtung der Rückseite und auch darüber hinaus.

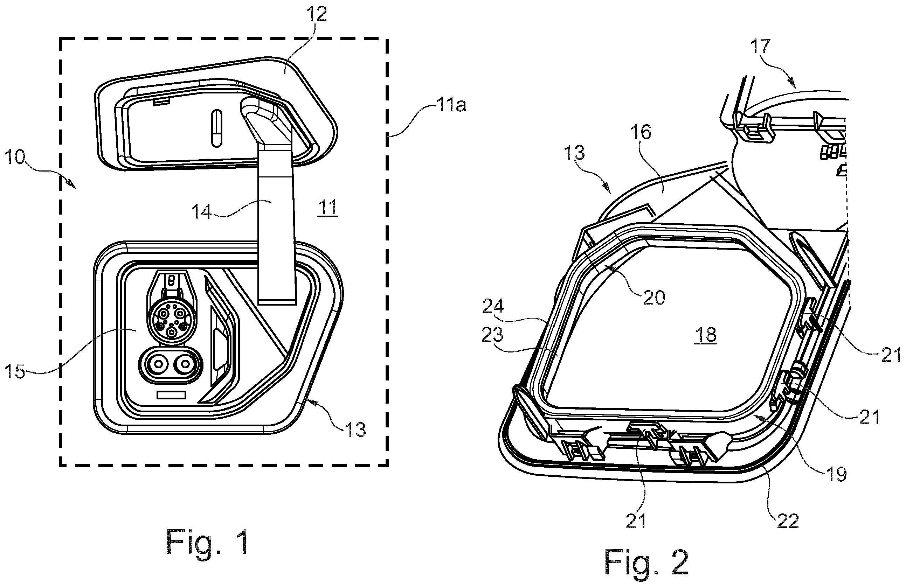

In **Figur 1** ist eine Ladevorrichtung 10 gemäß einer bevorzugten Ausführungsform der Erfindung gezeigt, die in einer Karosserieöffnung eines Kraftfahrzeugs 11 montiert ist. Die Ladevorrichtung 10 ist in einer Ansicht von vorne gezeigt, wobei eine Verschluss- oder Ladeklappe 12 der Ladevorrichtung 10 in einem geöffneten Zustand dargestellt ist. Die Ladeklappe 12 ist über einen Verbindungsarm 14 schwenkbar an einem Halteelement 13 befestigt, das hier als Ladetopf ausgebildet ist. Sie dient dazu, im geöffneten Zustand ein Anschlusselement 15, das hier als Ladedose 15 ausgebildet ist, von der Außenseite des Kraftfahrzeugs 11 her zugänglich zu machen, und im geschlossenen Zustand das als Ladetopf 13 ausgebildete Halteelement mit der darin befestigten Ladedose 15 nach außen hin zu verschließen.

**Figur 2** zeigt das Halteelement bzw. den Ladetopf 13 in einer Ansicht von hinten, d.h. mit Blick auf seine Rückseite 16. In dem hier gezeigten Beispiel wird die Ladeklappe 12 durch einen in der Figur nicht dargestellten Motor angetrieben, der über eine Antriebskinematik 17 die Ladeklappe 12 öffnet und schließt. Die Antriebskinematik 17 ist mit einem Gehäuse versehen und mechanisch an den Verbindungsarm 14 gekoppelt.

Motor und Antriebskinematik sind jedoch nicht zwingend erforderlich, beispielsweise wenn die Ladeklappe zum manuellen Öffnen und Schließen ausgebildet ist. Ebenso ist die Ladeklappe nicht zwingend erforderlich.

Das zur Befestigung an einem Karosserieteil 11a des Kraftfahrzeugs 11 ausgebildete Halteelement bzw. der Ladetopf 13 weist eine durchgehende Öffnung 18 auf, in die das Anschlusselement bzw. die Ladedose 15 (siehe Fig. 1) formschlüssig einsetzbar ist. Die Ladedose 15 dient zum Herstellen einer Steckverbindung mit einer elektrischen Ladestation, um Batterien des Kraftfahrzeugs 11 aufzuladen.

An der Rückseite 16 des Ladetopfes 13 ist eine Dichtungseinheit 19 als zusätzliches Bauteil befestigt, die einen hinter der Öffnung 18 des Ladetopfes 13 gelegenen Aufnahmebereich für die Ladedose 15 umgibt. Durch die Dichtungseinheit 19 wird die in die Öffnung 18 eingesetzte Ladedose 15 zum Ladetopf 13 hin abgedichtet. Dabei ist die Dichtungseinheit 19 derart an dem Ladetopf 13 befestigbar oder befestigt, dass sie nach dem Einsetzen der Ladedose 15 in den Ladetopf 13 von der Ladedose 15 vollständig überdeckt wird, sodass sie von außen nicht sichtbar ist.

Auf diese Weise bildet die Dichtungseinheit 19 mit ihrer Innenseite 20 eine Erweiterung der Kontaktfläche zwischen dem Ladetopf 13 und der Ladedose 15 nach hinten, d. h. in Tiefenrichtung des Ladetopfes 13 bzw. zum Fahrzeuginneren.

Dies hat zum einen den Vorteil, dass die Wertigkeit der Ladevorrichtung 10, die durch ihr Design und die sichtbaren Flächen vermittelt wird, durch die Abdichtung bzw. Dichtelemente an der Ladedose nicht beeinträchtigt wird. Darüber hinaus liegt ein besonderer Vorteil darin, dass durch die Verlängerung der Kontakt- bzw. Dichtungsfläche der Ladedose 15 in Tiefenrichtung des Ladetopfes 13 Toleranzen zwischen unterschiedlichen Fahrzeugteilen besser ausgeglichen werden können, an denen der Ladetopf 13 und die Ladedose 15 befestigt werden. Beispielsweise kann der Toleranzausgleich zwischen Ladedose und Ladetopf in y-Richtung und in x/z-Richtung des Fahrzeugs erfolgen.

Die Dichtungseinheit 19 ist als Dichtungsring ausgebildet. Sie ist an der Rückseite 16 des Ladetopfes 13 durch Befestigungselemente 21 befestigt, die Verbindungselemente bilden und als Clipsverbindungen zum Anclipsen der Dichtungseinheit 19 an den Ladetopf 13 ausgestaltet sind.

Weiterhin ist ein Dichtungsring 22 an der Rückseite 16 des Ladetopfes 13 in einem äußeren Randbereich von diesem angeordnet, um den Ladetopf 13 zu dem äußeren Karosserieteil 11a hin abzudichten.

Die Dichtungseinheit 19 umfasst zwei Komponenten 23, 24 aus unterschiedlichen Materialien. Die erste Komponente 23 ist aus einem verformbaren Material gefertigt, während die zweite Komponente 24 aus einem harten bzw. nicht verformbaren Material gefertigt ist. Die erste Komponente 23 befindet sich an der Innenseite 20 der Dichtungseinheit 19 und ist dort derart angeordnet, dass sie an der eingesetzten Ladedose 15 bzw. an deren Mantelfläche umlaufend anliegt.

Die zweite Komponente 24 der Dichtungseinheit 19 umgibt die erste Komponente 23 an deren Außenseite und ist so angeordnet, dass sie sich an dem Ladetopf 13 aufgrund ihrer Befestigung an diesem abstützt, um die aus einem weichen Material bestehende erste Komponente 23 umlaufend gegen die Außenseite bzw. die Mantelfläche der Ladedose 15 zu drücken, wenn diese in der Öffnung 18 des Ladetopfes 13 eingesetzt ist.

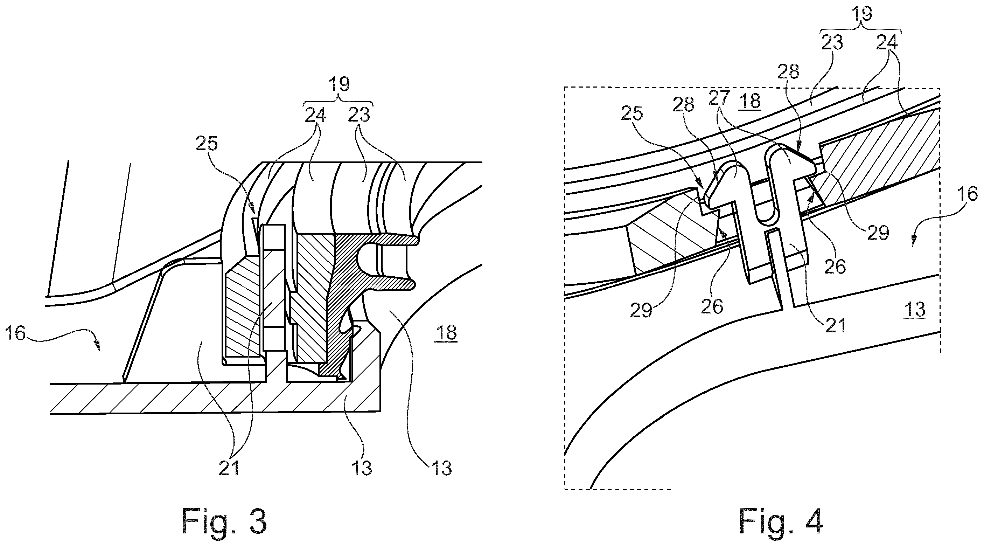

Die **Figur 3** zeigt in perspektivischer Darstellung einen Schnitt eines Teilbereichs des Ladetopfes 13 mit der daran befestigten Dichtungseinheit 19 im Bereich der Öffnung 18 des Ladetopfes 13. Die aus einem harten Material gefertigte zweite Komponente 24 ist durch die als Befestigungsclips ausgebildeten Befestigungselemente 21 an der Rückseite 16 des Ladetopfes 13 befestigt.

Die Befestigungselemente 21 in Form von Clips bilden jeweils Vorsprünge an der Rückseite 16 des Ladetopfs 13, die sich nach hinten, d.h. in Tiefenrichtung des Ladetopfs 13, erstrecken. Die Befestigungselemente 21 gelangen mit Befestigungsabschnitten 25 der zweiten Komponente 24 der Dichtungseinheit 19 in Eingriff, wenn diese an die Rückseite 16 des Ladetopfes 13 gedrückt wird.

Wie in **Fig. 4** in anderer Perspektive dargestellt, sind hierzu in den Befestigungsabschnitten 25 sich gegenüberliegende Einführschrägen 26 zum Einführen der Befestigungselemente 21 ausgebildet. Die Befestigungselemente 21 umfassen jeweils ein Paar elastischer Arme 27 mit schräg verlaufenden vorderen Endflächen 28, die derart ausgebildet sind, dass sie durch das Andrücken der Dichtungseinheit 19 an den Ladetopf 13 mittels der Einführschrägen 26 gegen einander gedrückt werden und dadurch in den Befestigungsabschnitt 25 gelangen. Sobald die Dichtungseinheit 19 beim Andrücken an die Rückseite 16 des Ladetopfes 13 ihre Endposition erreicht hat, rasten die elastischen Arme 27 aufgrund ihrer Rückstellkraft mit ihren Enden in Ausnehmungen 29 der harten Komponente 24 ein.

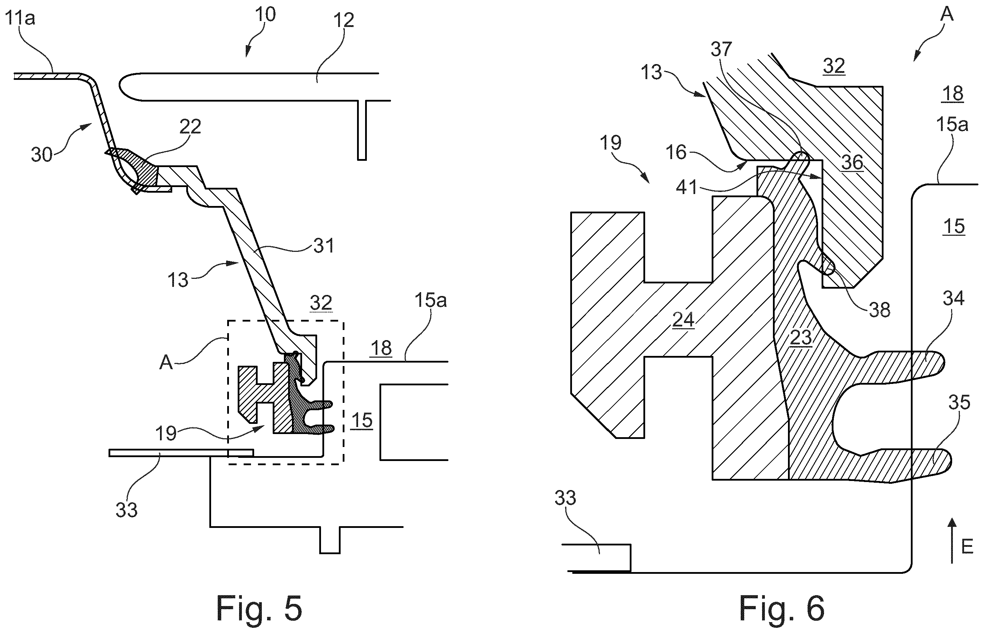

Die **Figuren 5 und 6** zeigen als Schnittdarstellungen einen Teilbereich der Ladevorrichtung 10, die in der Karosserieöffnung des Kraftfahrzeugs 11 montiert ist, und die zusammen mit der eingesetzten Ladedose 15 ein Ladeklappensystem bildet, wobei in Fig. 6 ein Teilbereich A von Fig. 5 vergrößert dargestellt ist.

Wie in Fig. 5 gezeigt, ist das als Ladetopf 13 ausgebildete Halteelement an einem Karosserieteil 11a bzw. am Seitenrahmen 30 des Kraftfahrzeugs 11 befestigt. Eine schräg nach unten bzw. im Fahrzeug schräg nach hinten bzw. konisch verlaufende, umlaufende Wandung 31 des Ladetopfes 13 bildet eine Senke 32 oder Mulde, an deren unterem bzw. hinterem Ende die Öffnung 18 zur Aufnahme der Ladedose 15 ausgebildet ist. Die Verbindung zwischen dem Ladetopf 13 und dem Seitenrahmen 30 des Kraftfahrzeugs 11 ist durch die dort positionierte Dichtung 22 abgedichtet.

Die Ladevorrichtung 10 ist an der Fahrzeugaußenseite durch die Ladeklappe 12 abgedeckt, die hier in geschlossenem Zustand gezeigt ist.

Die in der Öffnung 18 des Ladetopfes 13 positioniert Ladedose 15 ist an einem innen gelegenen Karosserieteil 33 befestigt, das zum Beispiel ein inneres Rahmenteil oder ein innerer Seitenrahmen des Kraftfahrzeugs 11 ist. Da der Ladetopf 31 an einem anderen Karosserieteil befestigt ist als die Ladedose 15, kommt es in der Regel zu Toleranzen der Position der Ladedose 15 relativ zum Ladetopf 13 in Tiefenrichtung, d. h. in Richtung nach hinten bzw. zum Inneren des Kraftfahrzeugs 11 hin.

In dem in Fig. 6 vergrößert dargestellten Teilbereich A der Ladevorrichtung 10 ist die Dichtungseinheit 19 angeordnet, welche die weiche Komponente 23 und die harte Komponente 24 umfasst. Die harte Komponente 24 ist als ein H-Profil ausgeführt, wodurch eine hohe Steifigkeit erreicht wird, sodass die harte Komponente 24 eine Gegenkraft für den Anpressdruck ausbildet, den die in der Öffnung 18 des Ladetopfes 13 positionierte Ladedose 15 auf die weiche Komponente 23 ausübt. Die Dichtungseinheit 19 gewährleistet durch die Ausgestaltung ihrer Hartkomponente 24 einen hohen Anpressdruck zum Abdichten der Ladedose 15.

Die Hartkomponente 24 ist vorteilhafterweise aus demselben Material gefertigt wie der Ladetopf 13. Es können jedoch auch andere Materialien verwendet werden, vorzugsweise Kunststoffe und insbesondere Thermoplaste. Auch kann die Hartkomponente 24 zusammen mit dem Ladetopf 13 als ein Teil bzw. einstückig ausgebildet sein.

Die zweite Komponente 24 erstreckt sich gemeinsam mit der daran befestigten ersten Komponente 23 von der Rückseite 16 des Ladetopfes 13 ausgehend nach hinten, d.h. in der Figur nach unten. Dadurch ist eine verlängerte Dichtungsfläche an der Außenseite der Ladedose 15 ausgebildet, die länger ist bzw. weiter in die Tiefe geht als die Kontaktfläche zwischen der Ladedose 15 und dem Ladetopf 13 im Bereich seiner Öffnung 18. D. h., die durch die Dichtungseinheit 19 und die daran angrenzende Ladedose 15 gebildete Dichtungsfläche ist hinter dem Ladetopf 13 mit seiner Öffnung 18 angeordnet.

Die Weichkomponente 23 umfasst zwei Dichtungslippen 34, 35, die in den Aufnahmebereich 15a für die Ladedose 15 hineinragen. D. h., die Dichtungslippen, 34, 35 erstrecken sich hinter dem Ladetopf 13 so weit in den Aufnahmebereich 15a seitlich hinein, dass sie sich beim Einsetzen der Ladedose 15 verformen und sich hinter der Öffnung 18 (in der Figur unterhalb der Öffnung) an die Mantelfläche der Ladedose 15 anlegen, wenn diese in der Ladevorrichtung 10 positioniert wird. Es kann auch eine beliebige andere Anzahl von Dichtungslippen 34, 35 vorgesehen sein. Die Weichkomponente 23 ist vorzugsweise aus Gummi gefertigt, insbesondere aus EPDM (Ethylen-Propylen-Dien-Kautschuk).

Zwischen der Hartkomponente 24 der Dichtungseinheit 19 und einem Randbereich 36 des Ladetopfes 13, der die Öffnung 18 umlaufend umgibt und sich als Wandung oder Kragen an der Rückseite 16 des Ladetopfes ein Stück weit nach hinten bzw. in Tiefenrichtung erstreckt, sind als Teil der Weichkomponente 23 weitere Dichtungslippen 37, 38 angeordnet. Der Randbereich 36 bildet an seiner Außenseite eine umlaufende Anlagefläche 41 für die Dichtungseinheit 19, die an der Innenseite des Randbereichs 36 bzw. der Wandung positioniert ist.

Beim Befestigen der Dichtungseinheit 19 an dem Ladetopf 13 verformt sich die Weichkomponente 23 mit ihren seitlich vorstehenden Dichtungslippen 37, 38, sodass diese sich an den Randbereich 36 bzw. an dessen Anlagefläche 41 anformen und dadurch eine Abdichtung zwischen der Hartkomponente 24 und dem Randbereich 36 herstellen.

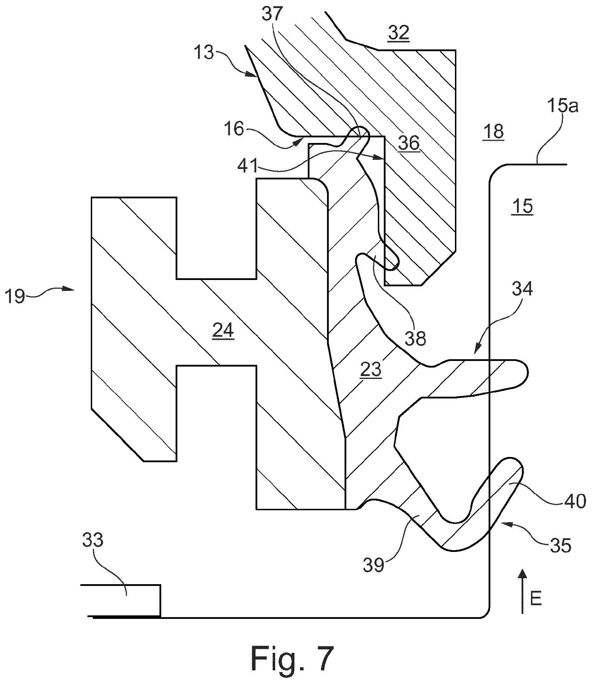

**Figur 7** zeigt eine weitere Ausführungsform der Erfindung, bei der eine der beiden Dichtungslippen 34 bzw. 35 L-förmig ausgebildet ist. D. h., die Dichtungslippe 35 bildet einen Winkel zwischen einem ersten Abschnitt 39, der sich schräg entgegen der Einführrichtung E beim Einführen der Ladedose 15 in die Ladevorrichtung 10 erstreckt, und einem zweiten Abschnitt 40 der Dichtungslippe 35, der sich schräg zur Einführrichtung beim Einsetzen der Ladedose 15 erstreckt. Die Winkel entgegen bzw. zur Einführrichtung betragen ca. 40 bis 50 Grad.

Nachfolgend wird unter Bezugnahme auf die Figuren ein Beispiel für ein Verfahren zur Montage einer Ladevorrichtung in einer Karosserieöffnung eines Kraftfahrzeugs beschrieben.

Zunächst wird ein Halteelement bereitgestellt, das in diesem Beispiel als Ladetopf 13 ausgebildet ist und die durchgehende Öffnung 18 aufweist, in die ein Anschlusselement zum Herstellen einer Steckverbindung mit einer elektrischen Ladestation und/oder mit einer Kraftstoffzufuhrleitung zur Zufuhr von Kraftstoff einsetzbar ist. In diesem Beispiel ist das Anschlusselement als Ladedose 15 ausgebildet.

Einer Dichtungseinheit 19 wird an dem Halteelement 13 derart befestigt, dass sie einen hinter der Öffnung 18 des Halteelements 13 gelegenen Aufnahmebereich 15a für das Anschlusselement 15 umgibt, um das eingesetzte Anschlusselement 15 zum Halteelement 13 hin abzudichten.

Das Halteelement 13 wird in der Karosserieöffnung eines Kraftfahrzeugs 11 befestigt, insbesondere an einem Seitenrahmen 30 des Fahrzeugs bzw. an einem außen gelegenen Rahmenelement.

Das Anschlusselement 15 wird in die Öffnung 18 des Halteelements 13 eingesetzt. Dabei wird die Dichtungseinheit 19 und insbesondere eine Weichkomponente 23 der Dichtungseinheit nach dem Einsetzen des Anschlusselements 15 von diesem überdeckt, so dass sie von außen nicht sichtbar ist.

Bevorzugt wird die Dichtungseinheit 19 an das Halteelement 13 angeclipst, um sie daran zu befestigen.

Vorzugsweise, jedoch nicht zwingend, werden die Verfahrensschritte in der beschriebenen Reihenfolge durchgeführt.

In dem hier beschriebenen Ausführungsbeispiel des Verfahrens wird eine Ladevorrichtung 15 montiert, wie sie oben im Detail beschrieben ist.

Bei den oben im Detail beschriebenen Ausführungsformen ist die Ladevorrichtung zum elektrischen Laden des Fahrzeugs ausgestaltet ist und umfasst als Halteelement einen Ladetopf und als Anschlusselement eine Ladedose. In anderen Ausführungsformen ist die Ladevorrichtung zum Beladen bzw. Betanken des Fahrzeugs mit einem Kraftstoff ausgestaltet. Dabei ist das Halteelement als eine Tankmulde ausgebildet, und das Anschlusselement ist als ein Aufnahmeelement mit einer Kraftstoffeinfüllöffnung zum Anschluss einer Kraftstoffzufuhrleitung an das Fahrzeug ausgebildet.

Durch die Erfindung wird erreicht, dass keine Dichtung am Ladetopf sichtbar ist. Dadurch wird ein wertiger Ladetopf, der eine Sekundärfläche bildet, dargestellt. Die Ladevorrichtung bildet zum Beispiel ein Ladeklappensystem, das einen dahinter liegenden Trockenraum abdichtet, wobei gleichzeitig keine Weichkomponente zu sehen ist. Außerdem werden zusätzlich noch die Toleranzen der Bauteile und die elastischen Verformungen der Ladedose, z.B. beim Anstecken eines Ladesteckers an der Dichtungsebene, ausgeglichen. Zudem wird durch die Erfindung die Norm der Ladedosengeometrie eingehalten

### Bezugszeichenliste:

- 10: Ladevorrichtung
- 11: Kraftfahrzeug
- 11a: Karosserieteil außen
- 12: Verschluss- bzw. Ladeklappe
- 13: Halteelement / Ladetopf
- 14: Verbindungsarm
- 15: Anschlusselement / Ladedose
- 15a: Aufnahmebereich
- 16: Rückseite des Ladetopfes
- 17: Antriebskinemathek
- 18: durchgehende Öffnung
- 19: Dichtungseinheit
- 21: Befestigungselemente
- 22: Dichtungsring
- 23: erste Komponente der Dichtungseinheit / Weichkomponente
- 24: zweite Komponente der Dichtungseinheit / Hartkomponente
- 25: Befestigungsabschnitte
- 26: Einführschrägen
- 27: elastische Arme
- 28: schräge Endflächen
- 29: Ausnehmungen
- 30: Seitenrahmen
- 31: Wandung des Ladetopfes
- 32: Senke
- 33: Karosserieteil innen
- 34, 35: Dichtungslippen
- 36: Randbereich
- 37, 38: Dichtungslippen
- 39: erster Abschnitt
- 40: zweiter Abschnitt
- 41: Anlagefläche
- E: Einführrichtung

## Patentansprüche

1. Ladevorrichtung zur Montage in einer Karosserieöffnung eines Kraftfahrzeugs, umfassend
ein Halteelement (13), das zur Befestigung an einem Karosserieteil (11a) ausgebildet ist und eine durchgehende Öffnung (18) aufweist, in die ein Anschlusselement (15) zum Herstellen einer Steckverbindung mit einer elektrischen Ladestation und/oder mit einer Kraftstoffzufuhrleitung zur Zufuhr von Kraftstoff einsetzbar ist, und
eine Dichtungseinheit (19), um das eingesetzte Anschlusselement (15) zum Halteelement (13) hin abzudichten,
wobei die Dichtungseinheit (19) eine erste Komponente (23) aus einem verformbaren Material umfasst, und eine zweite Komponente (24) aus einem nicht verformbaren Material umfasst,
wobei die erste Komponente (23) eine oder mehrere Dichtungslippen (34, 35) umfasst und beim Einsetzen des Anschlusselements (15) eine Dichtungsfläche an der Außenseite des Anschlusselements (15) bildet,
und die Dichtungseinheit (19) derart an dem Halteelement (13) befestigbar oder befestigt ist, dass sie nach dem Einsetzen des Anschlusselements (15) von diesem überdeckt wird, so dass sie von außen nicht sichtbar ist, **dadurch gekennzeichnet, dass**
die Dichtungseinheit (19) als ein zusätzliches Bauteil an der Rückseite (16) des Halteelements (13) angeordnet ist und sich von dort aus nach hinten erstreckt, wobei sie einen hinter der durchgehenden Öffnung (18) des Halteelements (13) gelegenen Aufnahmebereich (15a) für das Anschlusselement (15) umgibt,
wobei sich die ein oder mehreren Dichtungslippen (34, 35) ausgehend von der zweiten Komponente (24) so weit in den hinter dem Halteelement (13) gelegenen Aufnahmebereich (15a) hinein erstrecken, dass sie sich beim Einsetzen des Anschlusselements (15) in die durchgehende Öffnung (18) des Halteelements (3) verformen und sich hinter der durchgehenden Öffnung (18) umlaufend flächig an die Mantelfläche des Anschlusselements (15) anlegen.

2. Ladevorrichtung nach Anspruch 1, **dadurch gekennzeichnet, dass** die erste Komponente (23) derart ausgebildet ist, dass sie an dem eingesetzten Anschlusselement (15) umlaufend anliegt, wobei sich die zweite Komponente (24) an dem Halteelement (13) abstützt.

3. Ladevorrichtung nach Anspruch 1 oder 2, **dadurch gekennzeichnet, dass** die erste Komponente (23) mit mindestens einem Teilabschnitt in den hinter der Öffnung (18) gelegenen Aufnahmebereich (15a) hineinragt.

4. Ladevorrichtung nach einem der vorhergehenden Ansprüche, **dadurch gekennzeichnet, dass** die Dichtungseinheit (19) durch eine Clipsverbindung an dem Halteelement (13) befestigbar oder befestigt ist.

5. Ladevorrichtung nach einem der vorhergehenden Ansprüche, **dadurch gekennzeichnet, dass** die zweite Komponente (24) durch ein H-Profil gebildet wird, das an dem Halteelement (13) befestigbar oder befestigt ist.

6. Ladevorrichtung nach einem der vorhergehenden Ansprüche, **dadurch gekennzeichnet, dass** sich die zweite Komponente (24) gemeinsam mit der daran befestigten ersten Komponente (23) von der Rückseite (16) des Halteelements (13) aus nach hinten erstreckt, so dass eine durch die Dichtungseinheit (19) und das daran angrenzende Anschlusselement (15) gebildete Dichtungsfläche hinter der Öffnung (18) angeordnet ist.

7. Ladevorrichtung nach einem der vorhergehenden Ansprüche, **dadurch gekennzeichnet, dass** die erste Komponente (23) eine oder mehrere zweite Dichtungslippen (37, 38) umfasst, die zwischen der zweiten Komponente (24) und einem Randbereich (36) des Halteelements (13) angeordnet sind, der die Öffnung (18) umgibt und eine umlaufende Anlagefläche (41) für die Dichtungseinheit (19) bildet.

8. Ladevorrichtung nach vorhergehenden Ansprüche, **dadurch gekennzeichnet, dass** mindestens eine der ersten Dichtungslippen (34, 35) L-förmig ausgebildet ist und/oder einen Winkel bildet, wobei sich ein erster Abschnitt (39) der Dichtungslippe (35) schräg entgegen der Einführrichtung (E) und sich ein zweiter Abschnitt (40) der Dichtungslippe (35) schräg in Einführrichtung (E) beim Einsetzen des Anschlusselements (15) in die Öffnung (18) erstreckt.

9. Verfahren zur Montage einer Ladevorrichtung in einer Karosserieöffnung eines Kraftfahrzeugs, umfassend die Schritte:
Bereitstellen eines Halteelements (13), das eine durchgehende Öffnung (18) aufweist, in die ein Anschlusselement (15) zum Herstellen einer Steckverbindung mit einer elektrischen Ladestation und/oder mit einer Kraftstoffzufuhrleitung zur Zufuhr von Kraftstoff einsetzbar ist;
Befestigen einer Dichtungseinheit (19) an dem Halteelement (13), um das eingesetzte Anschlusselement (15) zum Halteelement (13) hin abzudichten, wobei die Dichtungseinheit (19) eine erste Komponente (23) aus einem verformbaren Material und eine zweite Komponente (24) aus einem harten Material umfasst;
wobei die erste Komponente (23) eine oder mehrere Dichtungslippen (34, 35) umfasst, die beim Einsetzen des Anschlusselements (15) eine Dichtungsfläche an der Außenseite des Anschlusselements (15) bilden, Befestigen des Halteelements (13) in der Karosserieöffnung; und
Einsetzen des Anschlusselements (15) in die Öffnung (18) des Halteelements (13);
wobei die Dichtungseinheit (19) nach dem Einsetzen des Anschlusselements (15) von diesem überdeckt wird, so dass sie von außen nicht sichtbar ist, **dadurch gekennzeichnet, dass**
die Dichtungseinheit (19) als ein zusätzliches Bauteil an der Rückseite (16) des Halteelements (13) derart befestigt wird, dass sie sich von dort aus nach hinten erstreckt und einen hinter der durchgehenden Öffnung (18) des Halteelements (13) gelegenen Aufnahmebereich (15a) für das Anschlusselement (15) umgibt,
wobei sich die ein oder mehreren Dichtungslippen (34, 35) ausgehend von der zweiten Komponente (24) soweit in einen hinter dem Halteelement (13) gelegenen Aufnahmebereich (15a) für das Anschlusselement (15) hinein erstrecken, dass sie sich beim Einsetzen des Anschlusselements (15) verformen und sich hinter der durchgehenden Öffnung (18) des Halteelements (13) umlaufend flächig an die Mantelfläche des Anschlusselements (15) anlegen.

10. Verfahren nach Anspruch 9, **dadurch gekennzeichnet, dass** die Dichtungseinheit (19) durch Anclipsen an dem Halteelement (13) befestigt wird und/oder eine Ladevorrichtung (10) nach einem der Ansprüche 1 bis 8 verwendet wird.

## Claims

1. Charging device for mounting in a body opening of a motor vehicle, comprising a holding element (13) that is configured for attachment to a body part (11a) and has a continuous opening (18) into which a connection element (15) for establishing a plug connection with an electrical charging station and/or with a fuel supply line for supplying fuel can be inserted, and
a sealing unit (19) to seal the inserted connection element (15) towards the holding element (13),
wherein the sealing unit (19) comprises a first component (23) made of a deformable material, and comprises a second component (24) made of a non-deformable material,
wherein the first component (23) comprises one or more sealing lips (34, 35) and forms a sealing surface on the outer side of the connection element (15) when the connection element (15) is inserted,
and the sealing unit (19) is attachable to or attached to the holding element (13) in such a way that it is covered by the connection element (15) after the connection element (15) has been inserted, so that it is not visible from the outside, **characterized in that**
the sealing unit (19) is arranged as an additional component on the rear side (16) of the holding element (13) and extends from there backwards, surrounding a receiving area (15a) for the connection element (15) located behind the continuous opening (18) of the holding element (13),
wherein the one or more sealing lips (34, 35) extend from the second component (24) into the receiving area (15a) located behind the holding element (13) to such an extent that they deform when the connection element (15) is inserted into the continuous opening (18) of the holding element (3) and lie flatly around the circumference against the jacket surface of the connection element (15) behind the continuous opening (18).

2. Charging device according to claim 1, **characterized in that** the first component (23) is configured to rest circumferentially on the inserted connection element (15), wherein the second component (24) is supported on the holding element (13).

3. Charging device according to claim 1 or 2, **characterized in that** the first component (23) protrudes with at least one partial section into the receiving area (15a) located behind the opening (18).

4. Charging device according to any of the preceding claims, **characterized in that** the sealing unit (19) is attachable to or attached to the holding element (13) by means of a clip connection.

5. Charging device according to any of the preceding claims, **characterized in that** the second component (24) is formed by an H-profile that is attachable to or attached to the holding element (13).

6. Charging device according to any of the preceding claims, **characterized in that** the second component (24), together with the first component (23) attached to it, extends backwards from the rear side (16) of the holding element (13), so that a sealing surface formed by the sealing unit (19) and the adjacent connection element (15) is arranged behind the opening (18).

7. Charging device according to any of the preceding claims, **characterized in that** the first component (23) comprises one or more second sealing lips (37, 38) that are arranged between the second component (24) and an edge area (36) of the holding element (13) that surrounds the opening (18) and forms a circumferential contact surface (41) for the sealing unit (19).

8. Charging device according to the preceding claims, **characterized in that** at least one of the first sealing lips (34, 35) is L-shaped and/or forms an angle, wherein a first section (39) of the sealing lip (35) extends at an angle against the insertion direction (E) and a second section (40) of the sealing lip (35) extends at an angle in the insertion direction (E) when the connection element (15) is inserted into the opening (18).

9. Method for mounting a charging device in a body opening of a motor vehicle, comprising the steps:
Providing a holding element (13) that has a continuous opening (18) into which a connection element (15) for establishing a plug connection with an electrical charging station and/or with a fuel supply line for supplying fuel can be inserted;
Attaching a sealing unit (19) to the holding element (13) to seal the inserted connection element (15) towards the holding element (13),
wherein the sealing unit (19) comprises a first component (23) made of a deformable material and a second component (24) made of a hard material;
wherein the first component (23) comprises one or more sealing lips (34, 35) that form a sealing surface on the outer side of the connection element (15) when the connection element (15) is inserted,
Attaching the holding element (13) in the body opening; and
Inserting the connection element (15) into the opening (18) of the holding element (13);
wherein the sealing unit (19) is covered by the connection element (15) after the connection element (15) has been inserted, so that it is not visible from the outside, **characterized in that**
the sealing unit (19) is attached as an additional component to the rear side (16) of the holding element (13) in such a way that it extends backwards from there and surrounds a receiving area (15a) for the connection element (15) located behind the continuous opening (18) of the holding element (13),
wherein the one or more sealing lips (34, 35) extend from the second component (24) into a receiving area (15a) for the connection element (15) located behind the holding element (13) to such an extent that they deform when the connection element (15) is inserted and lie flatly around the circumference against the jacket surface of the connection element (15) behind the continuous opening (18) of the holding element (13).

10. Method according to claim 9, **characterized in that** the sealing unit (19) is attached to the holding element (13) by clipping and/or a charging device (10) according to any of claims 1 to 8 is used.

## Revendications

1. Dispositif de chargement destiné à être monté dans une ouverture de carrosserie d'un véhicule à moteur, comprenant
un élément de maintien (13) qui est conçu pour être fixé à une partie de carrosserie (11a) et qui présente une ouverture continue (18) dans laquelle un élément de raccordement (15) peut être inséré pour établir une connexion enfichable avec une station de recharge électrique et/ou avec une conduite d'alimentation en carburant pour l'approvisionnement en carburant, et
une unité d'étanchéité (19) pour assurer l'étanchéité de l'élément de raccordement (15) inséré vers l'élément de maintien (13),
dans lequel l'unité d'étanchéité (19) comprend un premier composant (23) fait d'un matériau déformable, et comprend un deuxième composant (24) fait d'un matériau non déformable,
dans lequel le premier composant (23) comprend une ou plusieurs lèvres d'étanchéité (34, 35) et forme une surface d'étanchéité sur la face extérieure de l'élément de raccordement (15) lors de l'insertion de l'élément de raccordement (15), et l'unité d'étanchéité (19) peut être fixée ou est fixée à l'élément de maintien (13) de telle sorte qu'elle est recouverte par l'élément de raccordement (15) après l'insertion de l'élément de raccordement (15), de sorte qu'elle n'est pas visible de l'extérieur, **caractérisé en ce que**
l'unité d'étanchéité (19) est disposée comme composant supplémentaire sur la face arrière (16) de l'élément de maintien (13) et s'étend de là vers l'arrière, entourant une zone de réception (15a) pour l'élément de raccordement (15) située derrière l'ouverture continue (18) de l'élément de maintien (13),
où la ou les lèvres d'étanchéité (34, 35) s'étendent à partir du deuxième composant (24) dans la zone de réception (15a) située derrière l'élément de maintien (13) dans une mesure telle qu'elles se déforment lors de l'insertion de l'élément de raccordement (15) dans l'ouverture continue (18) de l'élément de maintien (3) et s'appliquent de façon plane sur tout le pourtour contre la surface d'enveloppe de l'élément de raccordement (15) derrière l'ouverture continue (18).

2. Dispositif de chargement selon la revendication 1, **caractérisé en ce que** le premier composant (23) est conçu pour reposer de manière circonférentielle sur l'élément de raccordement (15) inséré, le deuxième composant (24) s'appuyant sur l'élément de maintien (13).

3. Dispositif de chargement selon la revendication 1 ou 2, **caractérisé en ce que** le premier composant (23) fait saillie avec au moins une section partielle dans la zone de réception (15a) située derrière l'ouverture (18).

4. Dispositif de chargement selon l'une quelconque des revendications précédentes, **caractérisé en ce que** l'unité d'étanchéité (19) peut être fixée ou est fixée à l'élément de maintien (13) au moyen d'une connexion par clips.

5. Dispositif de chargement selon l'une quelconque des revendications précédentes, **caractérisé en ce que** le deuxième composant (24) est formé par un profil en H qui peut être fixé ou est fixé à l'élément de maintien (13).

6. Dispositif de chargement selon l'une quelconque des revendications précédentes, **caractérisé en ce que** le deuxième composant (24), avec le premier composant (23) qui y est fixé, s'étend vers l'arrière depuis la face arrière (16) de l'élément de maintien (13), de sorte qu'une surface d'étanchéité formée par l'unité d'étanchéité (19) et l'élément de raccordement (15) adjacent est disposée derrière l'ouverture (18).

7. Dispositif de chargement selon l'une quelconque des revendications précédentes, **caractérisé en ce que** le premier composant (23) comprend une ou plusieurs deuxièmes lèvres d'étanchéité (37, 38) qui sont disposées entre le deuxième composant (24) et une zone de bord (36) de l'élément de maintien (13) qui entoure l'ouverture (18) et forme une surface de contact circonférentielle (41) pour l'unité d'étanchéité (19).

8. Dispositif de chargement selon les revendications précédentes, **caractérisé en ce qu'**au moins l'une des premières lèvres d'étanchéité (34, 35) est en forme de L et/ou forme un angle, une première section (39) de la lèvre d'étanchéité (35) s'étendant en biais dans le sens contraire à la direction d'insertion (E) et une deuxième section (40) de la lèvre d'étanchéité (35) s'étendant en biais dans la direction d'insertion (E) lors de l'insertion de l'élément de raccordement (15) dans l'ouverture (18).

9. Procédé de montage d'un dispositif de chargement dans une ouverture de carrosserie d'un véhicule à moteur, comprenant les étapes suivantes:
Fourniture d'un élément de maintien (13) qui présente une ouverture continue (18) dans laquelle un élément de raccordement (15) peut être inséré pour établir une connexion enfichable avec une station de recharge électrique et/ou avec une conduite d'alimentation en carburant pour l'approvisionnement en carburant;
Fixation d'une unité d'étanchéité (19) à l'élément de maintien (13) pour assurer l'étanchéité de l'élément de raccordement (15) inséré vers l'élément de maintien (13), où l'unité d'étanchéité (19) comprend un premier composant (23) fait d'un matériau déformable et un deuxième composant (24) fait d'un matériau dur;
où le premier composant (23) comprend une ou plusieurs lèvres d'étanchéité (34, 35) qui forment une surface d'étanchéité sur la face extérieure de l'élément de raccordement (15) lors de l'insertion de l'élément de raccordement (15),
Fixation de l'élément de maintien (13) dans l'ouverture de la carrosserie; et
Insertion de l'élément de raccordement (15) dans l'ouverture (18) de l'élément de maintien (13);
où l'unité d'étanchéité (19) est recouverte par l'élément de raccordement (15) après l'insertion de l'élément de raccordement (15), de sorte qu'elle n'est pas visible de l'extérieur,
**caractérisé en ce que**
l'unité d'étanchéité (19) est fixée en tant que composant supplémentaire à la face arrière (16) de l'élément de maintien (13) de telle sorte qu'elle s'étend de là vers l'arrière et entoure une zone de réception (15a) pour l'élément de raccordement (15) située derrière l'ouverture continue (18) de l'élément de maintien (13),
où la ou les lèvres d'étanchéité (34, 35) s'étendent à partir du deuxième composant (24) dans une zone de réception (15a) pour l'élément de raccordement (15) située derrière l'élément de maintien (13) dans une mesure telle qu'elles se déforment lors de l'insertion de l'élément de raccordement (15) et s'appliquent de façon plane sur tout le pourtour contre la surface d'enveloppe de l'élément de raccordement (15) derrière l'ouverture continue (18) de l'élément de maintien (13).

10. Procédé selon la revendication 9, **caractérisé en ce que** l'unité d'étanchéité (19) est fixée à l'élément de maintien (13) par enclipsage et/ou un dispositif de chargement (10) selon l'une quelconque des revendications 1 à 8 est utilisé.
